# EUROPEAN PATENT SPECIFICATION

(11) **EP 3 947 291 B1**
(45) Date of publication and mention of the grant of the patent: **28.08.2024**
(21) Application number: 20716127.4
(22) Date of filing: 01.04.2020
(51) Int. Cl.: C02F 1/44, C02F 1/68

(54) **SYSTEM AND METHOD FOR PURIFICATION OF WATER BY MEMBRANE DISTILLATION**
SYSTEM UND VERFAHREN ZUR REINIGUNG VON WASSER DURCH MEMBRANDESTILLATION
SYSTÈME ET PROCÉDÉ DE PURIFICATION D'EAU PAR DISTILLATION MEMBRANAIRE

(30) Priority: 03.04.2019 NL 2022857
(43) Date of publication of application: 09.02.2022
(73) Proprietor: RAINMAKER HOLLAND B.V., 3029 AL Rotterdam (NL)
(72) Inventor: DESSING, Jacobus Petrus Maria, 2131 CV Hoofddorp (NL); KIPS, Jacques Marie René, 4569 AG Graauw (NL)
(74) Representative: Patentwerk B.V.
(86) International application number: PCT/NL2020/050223
(87) International publication number: WO 2020/204713

(56) References cited:
- CN-A- 104 190 260
- KR-A- 20170 129 507
- AHMADOU TIDIANE DIABY ET AL: "Design study of the coupling of an air gap membrane distillation unit to an air conditioner", DESALINATION., vol. 420, 1 October 2017 (2017-10-01), NL, pages 308 - 317, XP055650786, ISSN: 0011-9164, DOI: 10.1016/j.desal.2017.08.001
- AHMADOU DIABY ET AL: "Using heat-pump for simultaneous air conditioning and fresh water production by membrane distillation: performance prediction", 29 July 2017 (2017-07-29), XP055650876, Retrieved from the Internet <URL:https://hal.archives-ouvertes.fr/hal-01579602/document> [retrieved on 20191210]
- ALPATOVA A ET AL: "Co-axial hollow fiber module for air gap membrane distillation", JOURNAL OF MEMBRANE SCIENCE, vol. 578, 21 February 2019 (2019-02-21), pages 172 - 182, XP085618775, ISSN: 0376-7388, DOI: 10.1016/J.MEMSCI.2019.02.052

## Description

The invention relates to an autonomous system for purification of water by membrane distillation. The invention also relates to the use of a membrane distillation module in a system. The invention furthermore relates to a method of operation a system for purification of water by membrane distillation.

According to the World Health Organization is the world still on track for reaching the targets of the Sustainable Development Goals (SDG). One of the targets is to ensure by 2030, that all men and women, in particular the poor and the vulnerable, have access to basic services as drinking water. The accessibility of drinking water is divided in classifications, whereof it is a goal that people worldwide have at least access to 'basic drinking water'. A source of drinking water can be classified as basic drinking water service when it requires no more than 30 minutes per trip for a person to collect water. However, still a huge number of people use unprotected wells and springs or take water directly from surface water sources. The development of improved, alternative methods and sources in order to provide clean drinking water is therefore essential. A currently know technology for alternative production of drinking is using the so-called air-to-water technology. It is herewith possible to harvest water from air by making use of an air-to-water unit with a turbine that forces air through a heat exchanger, where the air is cooled and condensation takes place. A hybrid solution (solar/wind/grid) can be deployed to the same effect by driving a ventilation system. Lowering the temperature of air requires minimal energy and when the temperature falls below its dew point, water droplets will form. These droplets can then be collected in a water storage compartment. The amount of water which can be produced by using this system depends on the environment. The actual amount of water that can be produced in a particular location will depend on the average wind speed, the ambient temperature, and the relative humidity. To make the system work under different conditions, the turbine can be adapted to the environment in which it will be used, such as adjusting the blade diameter and the height of the tower to maximize the efficiency of the unit. The turbine can also be combined with solar and/or traditional power to maximize water production. Currently available air-to-water units use renewable energy. A drawback of this know technology is that the production of drinking water is still limited and therefore not applicable for large scale application.

Another example of a system according to the prior art focusing on the production of fresh water out of seawater or brackish water is described in the article titled 'Design study of the coupling of an air gap membrane distillation unit to an air conditioner' by Ahmadou Tidiane Diaby et al, DESALINATION., vol. 420, 1 October 2017 (2017-10-01), pages 308-317, XP055650786, NL ISSN: 0011-9164, DOI: 10.1016/j.desal.2017.08.001. The system focusses on combining a membrane distillation unit for desalination purposes with an air conditioning or refrigerator device in order to produce simultaneously a cooling capacity and fresh water. The combination with air conditioning or refrigerator devices can be made in urban areas. The technology would however not be applicable for local production of drinking water in rural areas.

It is therefore a goal of the invention to provide an alternative system for producing drinking water in, for example, rural areas.

The invention provides thereto a system according to the preamble, comprising:
- at least one main water supply for supplying water to the system,
- at least one membrane distillation module, the membrane module preferably comprising:
   ∘ at least one retentate channel for flow-through of a heated water stream, which retentate channel is at least partially defined by at least one vapour selective membrane allowing vapour of the heated water stream to flow via pores of the membrane to a distillation side of the membrane facing away from the retentate channel,
   ∘ at least one distillate channel at least partially defined both by said distillation side of the membrane and by a non-porous condenser wall separating said the distillate channel from a coolant channel for flow-through of a cold water stream to cool the condenser wall to condense vapour present in the distillate channel to give a distillate stream within said distillate channel,
   ∘ a coolant channel inlet, for supplying cold water with a first temperature to the coolant channel,
   ∘ a retentate channel inlet, for supplying heated water with a second temperature to the retentate channel,
      wherein the second temperature is higher than the first temperature,
   ∘ a coolant channel outlet, for discharging water from the coolant channel,
   ∘ a retentate channel outlet, for discharging water from the retentate channel,
   ∘ at least one distillate outlet for discharging distillate created in the distillate channel,
- at least one distillate receiving unit for receiving at least a fraction and preferably substantially all distillate discharged via the distillate outlet of the membrane distillation module,
- at least one heat pump comprising:
   ∘ a condenser configured for heating water to said second temperature before feeding this heated water into the retentate channel inlet, and
   ∘ an evaporator configured for cooling water to said first temperature before feeding this cooled water into the coolant channel inlet,
- preferably a renewable power supply, for powering the system, and in particular said at least one heat pump, and
at least one first buffer tank, connected to the main water supply, for storing water to be led through the evaporator of the heat pump into the coolant channel inlet, which first buffer tank is configured for receiving water discharged from the retentate channel outlet, wherein the system is configured for recirculation of at least a fraction of water from the first buffer tank via the evaporator of the heat pump, via the coolant channel of the membrane distillation module, directly or indirectly via the condenser of the heat pump, via the retentate channel of the membrane distillation module, back into the first buffer tank.

The system according to the invention enables circulation of at least a fraction of (process) water and preferably substantially all water such that a relatively high yield of distillate, and thus potable water, can be obtained from the (non-potable) water supplied to the system. The system is typically configured to operate batch wise. Despite the possible continuous supply of water, in particular non-potable water, and the continuous discharge of distillate, the system can operate substantially batch-wise due to the use of at least one first buffer tank. At least a fraction, and preferably substantially all water circulates within the system till said water reached a certain level of conductivity. Due to the distillation process the concentration of salt in the water increases, which results in an increased conductivity of the water. The conductivity level of the water is therefore an indication of the salinity level of the water. Hence, measuring the conductivity can provide an indication if the water in the system should be discharged. The water which is to be discharged can be referred to as brine. This water, and thus brine, comprises a high-concentration solution of salt (usually sodium chloride) in water. Generally, and within the definition of this invention, brine refers to water having salt concentration ranging from about 3.5% up to about 26%. A benefit of the system is that the system is relatively energy efficient, inter alia due that the system enables that no vacuum is required in order to provide transport over the membrane. The system therefore makes use of membrane distillation via at least one membrane distillation module, in particular via at least one vapour selective membrane. The membrane distillation can also be referred to as water desalination and/or water purification. The term distillate within the context of the invention is interchangeable for the term condensate. The at least one vapour selective membrane of the membrane distillation module ensures that water supplied on the coolant channel inlet is not in direct contact with water supplied at the retentate channel inlet. The vapour selective membrane is generally a hydrophobic membrane. The vapour selective membrane is typically a porous membrane. The pores in the vapour selective membrane are relatively large compared to pores in a reverse osmosis membrane resulting in that less pressure and energy is required for the membrane distillation process. The driving force of this technology is the partial pressure difference between each side of the membrane pores. Hence, the temperature difference of the water over the membrane provides a driving force, such that at least a fraction of the relatively warm water provided at the retentate channel inlet to the retentate channel will evaporate through the vapour selective membrane. This water vapour will condense when it contacts a condenser layer of the membrane unit, such that the water vapour is condensed into distillate. The relatively cold water supplied at the coolant channel inlet to the coolant channel provides cooling of the condenser layer, in particular at a coolant side of at least one membrane. It is furthermore beneficial that the system can operate at relatively low pressures. This results in low energy requirements and is also beneficial for safety reasons. A further benefit of the system according to the invention is that potable water can be produced at the point of use, thereby eliminating transportation and distribution costs.

The invention in particular relates to the production of potable water from non-potable water. When it is referred to potable water, drinking water is meant. Non-limiting examples of non-potable water to be used in a system according to the invention are for example seawater, rain water, storm water, brackish water and/or water from a contaminated water source. The non-potable water which is supplied as water typically has a conductivity higher than 50 µS/m. The conductivity of said non-potable water is typically about 5 S/m.

The system preferably comprises a renewable power supply, such as a stand-alone power system (SAPS) or remote area power supply (RAPS), for powering the system. The power supply will typically be used to power any component of the system that requires power to be operated, controlled, and/or actuated, such as water pumps, the at least the heat pump, a control unit, sensors, valves, etc. This power supply can be any of the known off-the-grid electricity systems. Non-limiting examples for such power supplies are wind energy and/or solar energy. It is however also possible that the system is configured to be powered via the grid, via a generator of via a hybrid power supply.

In a preferred embodiment, the system comprises multiple membrane distillation modules, wherein each membrane module comprises at least one retentate channel for flow-through of a heated water stream, which retentate channel is at least partially defined by at least one vapour selective membrane allowing vapour of the heated water stream to flow via pores of the membrane to a distillation side of the membrane facing away from the retentate channel, at least one distillate channel at least partially defined both by said distillation side of the membrane and by a non-porous condenser wall separating said the distillate channel from a coolant channel for flow-through of a cold water stream to cool the condenser wall to condense vapour present in the distillate channel to give a distillate stream within said distillate channel, a coolant channel inlet, for supplying cold water with a first temperature to the coolant channel, a retentate channel inlet, for supplying heated water with a second temperature to the retentate channel, wherein the second temperature is higher than the first temperature, a coolant channel outlet, for discharging water from the coolant channel, a retentate channel outlet, for discharging water from the retentate channel, and at least one distillate outlet for discharging distillate created in the distillate channel. Preferably, each membrane distillation module is fed by the same heat pump.

The multiple membranes modules are preferably arranged in parallel. It is further conceivable that each membrane module comprises an individual channel through the condenser of at least one heat pump for heating water to said second temperature before feeding this heated water into the retentate channel inlet of the respective membrane module. This embodiment is beneficial as it may ensure equal flow on both the cold and hot side of each membrane module. Each membrane module may further comprises at least one control valve configured to obtain an equal pressure and flow per membrane module.

Possibly, the system further comprises at least one second buffer tank, preferably connected to the main water supply, for storing water to be led through the condenser of the heat pump into the retentate channel inlet, which second buffer tank is configured for receiving water discharged from the coolant channel of at least one membrane module.

The system is preferably configured for recirculation of at least a fraction of water initially led by the main water supply into the first buffer tank and second buffer tank, wherein water is displaced from the first buffer tank to the second buffer tank and from the second buffer tank to the first buffer tank, typically via at least one heat pump and at least one membrane distillation module. Due to this recirculation, the amount of water needed to create a certain amount of distillate (pure water) could be kept limited, which is not only favourable from an economic and energetic point of view, but is also advantageous in areas where water resources are tight. Typically, the heat pump will gradually create a temperature difference between the first buffer tank and the second buffer tank. Typically, the system can be configured for recirculation of at least a fraction of water from the first buffer tank via the evaporator of the heat pump, via the coolant channel of the membrane distillation module, via the second buffer tank, via the condenser of the heat pump, via the retentate channel of the membrane distillation module, back into the first buffer tank. Also typically, the system is configured for recirculation of at least a fraction of water from the second buffer tank, via the condenser of the heat pump, via the retentate channel of the membrane distillation module, via the first buffer tank, via the evaporator of the heat pump, via the coolant channel of the membrane distillation module, back into the second buffer tank. Hence, during this (re)circulation water is led through a chain of components (the buffer tanks, the heat pump(s), and the membrane distillation module(s)), a plurality of time. This allows the purification process executed by the system according to the invention to be executed in a batch wise manner. To this end, it is favourable in case the main water supply is provided with a main valve to selectively either (i) to allow water to flow from the main water supply into the first buffer tank and/or the second buffer tank, or (ii) to prevent water to flow from the main water supply into the first buffer tank and/or the second buffer tank. In case of a batch process, the main valve is typically closed after filling of the system, in particular - either directly or indirectly - the first buffer tank and/or second buffer tank, and prior to (or during) the recirculation process of the water within the system as indicated above. During this (re)circulation, distillate will be produced substantially continuously. Consequently, during (re)circulation, the salt (and mineral) concentration in the circulated water stream will increase substantially continuously as well. At a certain moment in time, the circulated water stream will reach or approach its point of crystallization, which could lead to precipitation of salts and/or minerals within the system which is undesired. Therefore, it is advantageous in case the electrical conductivity is monitored by using at least one (electrical) conductivity senor during the purification process to prevent this to happen. In case, for example, the electrical conductivity of the circulated water stream exceeds a critical (predefined) conductivity limit, the circulation will commonly be interrupted and/or at least a part of the (salt) water will be discharged (drained) from the system, typically by using a pump.

More generically, it is preferred that at least one buffer tank is preferably provided with at least one sensor configured to measure at least one water related parameter, wherein said sensor is preferably selected from the group consisting of: a level sensor, a temperature sensor, an electrical conductivity sensor, a flow sensor and an optical sensor. As stated above, the conductivity of the water is an indication of the salt concentration of the water, which concentration provides an indication of the condition of water. If the concentration of for example salts it at a certain level, for example near saturation, the yield of distillate will decrease. Hence it useful to sense the conductivity of water in for example the second buffer tank, if applied, in order to be able to determine if the water in the system should be discharged. It is an advantage that the system according to the invention provides that the water can be circulated over a number of process cycles, since this may contribute to a higher yield of potable water. However, monitoring of the conductivity of water in at least one buffer tank, in particular water in the second buffer tank, can further improve the efficiency of the system.

It is also beneficial if at least the first buffer tank comprises at least one level sensor for sensing the liquid level of water in said first buffer tank. Based upon the liquid level in the first buffer tank it can be determined if at least a fraction of new non-potable water should be supplied to the system. Due to distillate generally being continuously discharged from the system, it might be required to continuously supply water to the system. Since the amount of distillate which is discharged is dependent on several factors influencing the membrane distillation, for example the driving force of the distillation process, it is a challenge to supply an equal quantity of water to the system as is discharged for the system as distillate. However, the liquid level in for example the first buffer tank may be a relative measure for the fill rate of the system. It is however also conceivable that the liquid level in second buffer tank is measured or that the liquid level of both buffer tanks is monitored. In a preferred embodiment the system comprises a control unit for controlling the main water supply based upon the liquid level sensed by said level sensor such that a minimum and/or maximum liquid level will be maintained in the first buffer tank. Possibly the system comprises at least one temperature sensor for measuring the temperature of water. Preferably the sensor is configured to measure the temperature of water in the first and/or the second buffer tank. Possibly the system comprises at least one sensor for measuring the first and/or second temperature.

The system comprises in a further possible embodiment at least one sensor to measure at least one water related parameter both at the retentate channel inlet, the retentate channel out, the coolant channel inlet, and the coolant channel outlet, wherein said sensor is preferably selected from the group consisting of: a level sensor, a temperature sensor, an electrical conductivity sensor, a flow sensor and an optical sensor.

The system may for example be configured to retain the circulation until at least one sensor measures at least one water related parameter value meeting and/or exceeding a predefined critical parameter value.

Additionally, the system can be configured to remove water from the first buffer tank and/or the second buffer tank in case at least one sensor measures at least one water related parameter value meeting and/or exceeding a predefined critical parameter value.

In a preferred embodiment, the system comprises a discharge pump for displacing water from the first buffer tank and/or the second buffer tank to a water waste outlet for discharging water from the system. It is in particular beneficial if such discharge pump is powered via a stand-alone power system or remote area power supply.

The distillate receiving unit is in a possible embodiment (also) provided with at least one sensor, preferably a conductivity sensor. Said sensor can for example be configured to measure the conductivity of the distillate in order to verify the quality of the distillate and/or to determine any leakage of the membrane distillation module, in particular of the membrane and/or of the separation wall.

Typically, the system comprises at least one liquid waste outlet for discharging water from the system. During use of the system said liquid waste outlet shall preferably be substantially fully closed in order to prevent that the circular character of the system is negatively affected. The liquid waste outlet preferably forms part of the second buffer tank. As outlined above, the conductivity of water in the second buffer tank can be a measure for the quality of the water. It might be advantageous to determine a predefined conductivity of water which indicates that at least a fraction of the water should be discharged.

The system preferably comprises a control unit for controlling the system, in particular one or more controllable components, such as a pump, sensor, or valve, of the system.

The control unit can for example be preprogrammed or programmable to compare a measured water related parameter value with at least one predefined parameter value. The control unit can also be preprogrammed or programmable to activate the discharge pump in case the measure water related parameter value meets and/or exceeds at least one predefined parameter value. The control unit may be preprogrammed or programmable to open the main valve to fill the first buffer tank and/or second buffer tank with new water extracted from an external water source, such as a water well and/or surface water, like a sea, a lake, or a river.

In a further preferred embodiment comprises the system a control unit for controlling the discharge of water, preferably via the liquid waste outlet, based upon the conductivity determined by said conductivity sensor. Hence, water can be discharged from the system when a predefined conductivity of water is reached. It is for example possible that water is discharged when it reaches a conductivity of at least 50 S/m. It is for example conceivable that the control unit is configured to control at least one actuator of the liquid waste outlet. In a preferred embodiment, the supply of water is at least temporarily stopped when water is discharged from the system.

An embodiment of the system is possible, wherein the main water supply is configured to supply non-potable water to at least the first buffer tank. Via the first buffer tank it is possible to supply water to the entire system, since water is circulated via the membrane module and the first buffer tank and second buffer tank, if applied. It is also possible that water is supplied to second buffer tank either directly or via the first buffer tank.

The control unit can be the same control unit as mentioned above configured for controlling the discharge of water. It is beneficial if the control unit is configured to control a minimum and/or maximum liquid level in at least the first tank. As stated before, the liquid level of the first buffer tank may be a relatively reliable measure for the fill rate of the system. Therefore it may be possible to ensure that a sufficient amount of water is circulating within the system.

It is also conceivable that the system comprises at least one drainage element for transferring water between the first buffer tank and the second buffer tank. The drainage element is thereby preferably configured to transfer water between the first and the second tank in case of the liquid level in a buffer tank reaching a predetermined level and/or in case of an overflow. This may be useful when the flow of water within the system is relatively low which may result in a relatively high liquid level in at least one of the buffer tanks. It is also possible that there is need for drainage of water in a buffer tank when a relatively large volume of water is supplied to the system. It is for example possible to use the drainage element for initial filling of the system with water. It is conceivable that the drainage element is substantially activated via gravity.

The membrane distillation module indicated above is typically an air gap membrane distillation module. The air gap related to the distillate channel enclosed by the membrane and the separation will and is configured to allow creation and subsequent discharge of distillate (pure water (H₂O)). Preferably, the system is configured to pass the heated water stream through the retentate channel in counter-current with the cold water stream led through the coolant channel. This will typically improve the exchange of thermal energy within the membrane distillation unit in order to form distillate.

Typically, at least one membrane distillation module comprises at least one spirally wound membrane, and an adjacent spirally wound condenser wall (separation wall). Such a configuration of the membrane distillation module typically leads to a favourable (membrane/wall) surface to (module) volume ratio. This means that the membrane distillation module can be design in a relatively compact manner, typically with a substantially cylindrical design, while still have a relatively large enthalpy (thermal energy, including latent energy) exchanging capacity. The membrane of the membrane distillation module is preferably made of polytetrafluoroethylene (PTFE), preferably stretched PTFE. Typically, this material does allow vapour to pass while being repellent for liquid water. The at least one condenser wall is preferably made of a thermally conductive material, more preferably metal, in particular aluminium. This wall is typically relatively thin in order secure a relatively smooth and efficient exchange of thermal energy between the cooling cold water stream and the vapour to be condensed within the distillate channel.

In an advantageous embodiment comprises the membrane unit comprises at least one spiral wound membrane. The membrane unit preferably comprises multiple spiral wound membranes, for example multiple spiral wound membrane modules. Spiral wound membranes benefit of relatively high packing density, resulting in a relatively high efficiency of the membranes.

In a possible embodiment comprises the system at least one additive supply for supplying at least one additive to the distillate. The additive supply is possibly configured for supplying at least one additive to the distillate receiving unit. The additive can be any known additive, such as salts and/or minerals, used to produce potable water from distillate. A non-limiting example of such additive is sodium hypochlorite (NaOCI).

The system according to the invention is typically configured to operate at a pressure below 1 bar, preferably below 0.75 bar, more preferably below 0.5 bar. This is a relatively low pressure, which is beneficial for the energy efficiency of the system. This is furthermore beneficial for safety reasons, and to prevent excessive stress on the membrane surfaces.

The heat pump can for example be an ammonia heat pump. Ammonia heat pumps are suitable for large scale industrial applications. Ammonia is a suitable refrigerant for the temperature ranges wherein the system is configured to operate. As mentioned before, preferably the ammonia heat pump is powered by said at least one remote area power supply.

Generally the system comprises at least one pump for displacing water within the system. Preferably the system comprises multiple pumps for displacing water within the system. It is in particular beneficial if at least one pump is powered by said at least one remote area power supply.

It is beneficial if the condenser is configured for heating water to a temperature of at least 40 degrees Celsius, preferably at least 50 degrees Celsius, more preferably at least 60 degrees Celsius. Additionally, it is beneficial evaporator is configured for cooling water to a temperature below 30 degrees Celsius, preferably below 20 degrees Celsius, more preferably below 15 degrees Celsius. By applying said temperatures a sufficient temperature gradient can be provided over the membrane, such that evaporative transport through at least one membrane is facilitated.

Preferably, the first buffer tank and/or the second buffer tank have a volume of at least 500 litres, preferably at least 1000 litres. This embodiment enables that a relatively large volume of water can be circulated within the system. The second buffer tank, if applied, may or may not be connected to the main water supply. The second buffer tank may, for example, be formed by an open container or a closed container. The second buffer tank may, for example, also be formed by a conduit used to circulate at least a fraction of water within the system.

In a further possible embodiment the system comprises at least one filter for filtering water, preferably before said water is supplied to the system. The filter can for example be provided at the supply for non-potable water. The filter can prevent that for example solid particles and/or contaminations can enter the system. Non-limiting examples of such filter are a disk filter, a sand filter and/or a membrane filter.

As already addressed above, the main water supply is typically connected or connectable to an external water reservoir, such as a water well or surface water, such as a sea, a lake, or a river.

Typically in order to increase the purification capacity of the system, without having to increase the water pressure within the system, it is preferred that the system comprises a plurality of membrane distillation modules, preferably arranged in parallel, wherein each membrane distillation module is connected, either directly or indirectly, to both the first buffer tank and the second buffer tank. Each membrane distillation module may be connected to its own heat pump. However, it is more advantageous in case a single heat pump, typically with a single evaporator and a single condenser, is used to cool respectively to heat the water stream before guiding the water stream into various membrane distillation modules. Hence, the heat pump may therefore act as collective heat pump (or shared heat pump) within the system.

It may be advantageous in case the main water supply comprises a prebuffer tank for storage of water taken from an external water source and to be fed to the first buffer tank and/or second buffer tank. This could expedite the filling process of filling the first buffer tank and/or the second buffer tank.

Preferably, the system is a mobile system, which can be easily moved to places where purification of water, typically in order to create potable water, is needed. To this end, it is preferable that at least a part of the system is accommodated in a container, preferably a twenty-foot equivalent unit (TEU).

The invention also relates to the use of a membrane distillation module and/or a heat pump in a system according to the invention.

The invention further relates to a method of operating a system for purification of water by membrane distillation according to the invention, comprising the steps of: A) filling the first tank and the second buffer tank with water by using the main water supply, B) leading water originating from the first buffer tank through the evaporator, and subsequently through the coolant channel of at least one membrane distillation module and directly or indirectly through condenser, and subsequently through the retentate channel of at least one membrane distillation module and into the first buffer tank, wherein distillate will be created within the distillate channel of the membrane distillation module, together forming a chain of components, and C) receiving distillate created in the distillate channel in at least one distillate receiving unit for receiving. Preferably, during step B) water will be circulated in said chain of components a plurality of times. Preferably, steps A), B) and C) are performed as batch process. Preferably, during step B) at least one water related parameter, in particular the electrical conductivity, is measured. More preferably, during step B)
at least one measured parameter value is compared with at least one predefined parameter value, and wherein, in case the measured parameter value meets and/or exceeds the predefined parameter value, the execution of step B) is interruption, and preferably at least a part of water present in said chain of components is discharged from the system, more preferably by using a discharge pump.

The invention will be elucidated on the basis of non-limitative exemplary embodiments shown in the following figures.

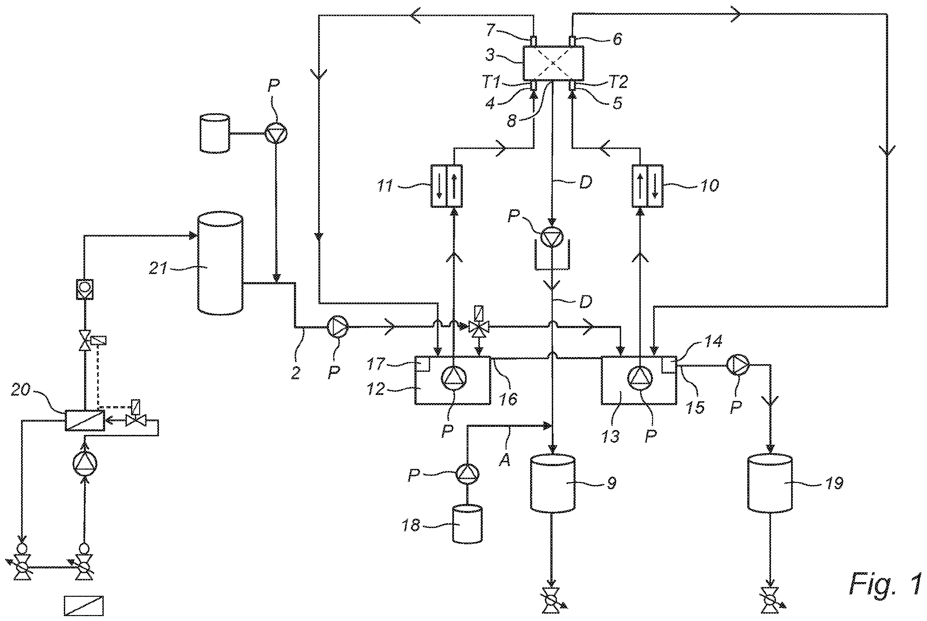

Figure 1 shows a schematic view (process scheme) of a first possible embodiment of an autonomous system (1) for purification of water taken from an external source, in particular to produce potable water, according to the present invention. The system (1) comprises a main water supply (2) for supplying non-potable water to the system, and a membrane module (3) or membrane unit (3) for distillation of non-potable water. The membrane unit (3) comprises at least one, and preferably multiple vapour selective membranes, a coolant channel inlet (4), for supplying water with a first temperature T1 to the membrane unit (3), a retentate channel inlet (5), for supplying water with a second temperature T2 to the membrane unit (3), a coolant channel outlet (6), for discharging water from the membrane unit (3) which was supplied at the coolant channel inlet (4) and a retentate channel outlet (7), for discharging water from the membrane unit (3) which was supplied at the retentate channel inlet (5) and a distillate outlet (8) for discharging distillate D which is distilled from water supplied at the retentate channel inlet (4) via the at least one vapour selective membrane. The system (1) furthermore comprises a distillate receiving unit (9) for receiving at least a fraction and preferably substantially all distillate D discharged from the membrane unit (3). The system (1) comprises a heat pump, such as an ammonia heat pump, the heat pump at least comprising a condenser (10) for heating water to a second temperature T2 before the water is fed to the retentate channel inlet (5) of the membrane unit (3) and an evaporator (11) for cooling water to a first temperature T1 before the water is fed to the coolant channel inlet (4) of the membrane unit (3). The system (1) furthermore comprises a first buffer tank (12) and a second buffer tank (13) for storing water. The first buffer tank (12) receives water from the retentate channel outlet (7) of the membrane unit (3) and supplies water to the coolant channel inlet (4) of the membrane unit (3). The second buffer tank (13) receives water from the coolant channel outlet (6) of the membrane unit (3) and supplies water to the retentate channel inlet (5) of the membrane unit (3). The system (1) is configured for circulation of at least a fraction of water and preferably substantially all water via the first buffer tank (12), the membrane unit (3) and the second buffer tank (13) till at least a fraction of the water reaches a predefined conductivity. The system (1) preferably comprises a stand-alone power system (SAPS) or remote area power supply (RAPS), for powering at least the heat pump. This can be any of the known off-the-grid electricity systems. The system (1) according to the invention is configured such that the second temperature T2 is higher than the first temperature T1.

The system (1), and in particular the second buffer tank (13) comprises a conductivity sensor (14) for determining the conductivity of water, preferably the conductivity of water in the second buffer tank (13). Based upon the conductivity of the water in the second buffer tank (13) the degree of saturation of the water can be determined. This is useful in order to determine whether the water should be removed from the system, such that the system (1) can subsequently be refilled with non-potable water to be used in the distillation process. The system (1) therefore comprises a liquid waste outlet (15) for discharging water from the system (1). The liquid waste outlet (15) may possibly be configured to supply the waste water to a further waste buffer (19). The main water supply (2) is configured to supply non-potable water to at least the first buffer tank (12). However, it is also possible that the main water supply (2) supplies water to the second buffer tank (13) either directly or indirectly. This can for example be done via an overflow (16) of the first buffer tank (12). At least the first buffer tank (12) comprises a level sensor (17) for sensing the liquid level of water in said first buffer tank (12). It is however, also possible that any of the further tanks comprises a liquid level sensor and/or a conductivity sensor and/or any further sensor such as for example a temperature sensor. In a preferred embodiment the system (1) comprises a control unit (not shown) for controlling the main water supply (2) based upon the level sensed by said level sensor (17) such that a minimum and/or maximum liquid level is maintained in the first buffer tank (12). The system (1) furthermore comprises an additive supply (18) for supplying at least one additive A to the distillate D. The additive A generally comprises sodium hypochlorite (NaOCI). It is a benefit of the system (1) that the system (1) is configured to operate at relatively low pressures, such as a pressure below 1 bar, preferably below 0.75 bar, more preferably below 0.5 bar. The system (1) also comprises a filter (20) for filtering water before it is supplied to the circular water system. As can be seen in the figure, the filter non-potable water is collected in a buffer tank (21) before it is supplied to the system (1). The system (1) comprises multiple pumps P for the transfer of water.

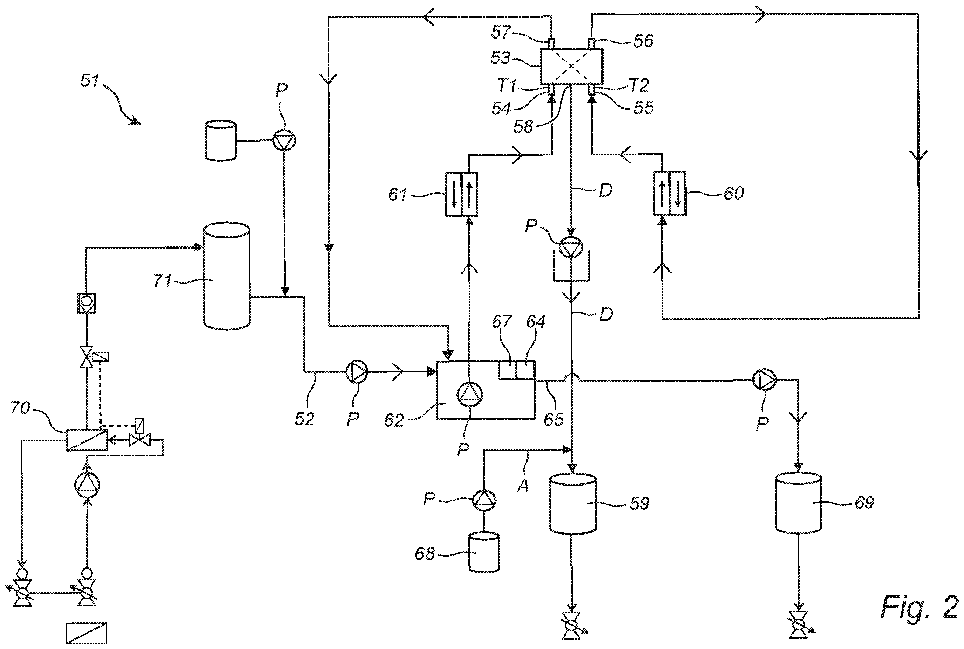

Figure 2 shows a schematic view (process scheme) of a second possible embodiment of an autonomous system (51) for purification of water taken from an external source, in particular to produce potable water, according to the present invention. The system (51) comprises a main water supply (52) for supplying non-potable water to the system, and a membrane module (53) for distillation of non-potable water. The membrane module (53) comprises at least one, and preferably multiple vapour selective membranes, a coolant channel inlet (54), for supplying water with a first temperature T1 to the membrane module (53), a retentate channel inlet (55), for supplying water with a second temperature T2 to the membrane module (53), a coolant channel outlet (56), for discharging water from the membrane module (53) which was supplied at the coolant channel inlet (54) and a retentate channel outlet (57), for discharging water from the membrane module (53) which was supplied at the retentate channel inlet (55) and a distillate outlet (58) for discharging distillate D which is distilled from water supplied at the retentate channel inlet (54) via the at least one vapour selective membrane. The system (51) furthermore comprises a distillate receiving unit (59) for receiving at least a fraction and preferably substantially all distillate D discharged from the membrane module (53). The system (51) comprises a heat pump, such as an ammonia heat pump, the heat pump at least comprising a condenser (60) for heating water to a second temperature T2 before the water is fed to the retentate channel inlet (55) of the membrane module (53) and an evaporator (61) for cooling water to a first temperature T1 before the water is fed to the coolant channel inlet (54) of the membrane module (53). The system (51) furthermore comprises a first buffer tank (62) for storing water. The first buffer tank (62) receives water from the retentate channel outlet (57) of the membrane module (53) and supplies water to the coolant channel inlet (54) of the membrane module (53). Water which is discharged at the coolant channel outlet (56) is led through the condenser (60) and subsequently into the retentate channel inlet (55) of the membrane distillation module (53). The system enables water circulation till at least a fraction of the water reaches a predefined conductivity. The system (51) preferably comprises a stand-alone power system (SAPS) or remote area power supply (RAPS), for powering at least the heat pump. The system (51) according to the invention is typically configured such that the second temperature T2 is higher than the first temperature T1. The system (51), and in particular the first buffer tank (62) comprises a conductivity sensor (64) for determining the conductivity of water. The system (51) comprises a liquid waste outlet (55) for discharging water from the system (51). The liquid waste outlet (65) may possibly be configured to supply the waste water to a further waste buffer (69). The main water supply (52) is configured to supply non-potable water to at least the first buffer tank (52). The first buffer tank (62) comprises a level sensor (67) for sensing the liquid level. The system (51) furthermore comprises an additive supply (68) for supplying at least one additive A to the distillate D. The system (51) also comprises a filter (70) for filtering water before it is supplied to the circular water system. As can be seen in the figure, the filter non-potable water is collected in a buffer tank (71) before it is supplied to the system (51). The system (51) comprises multiple pumps P for the transfer of water.

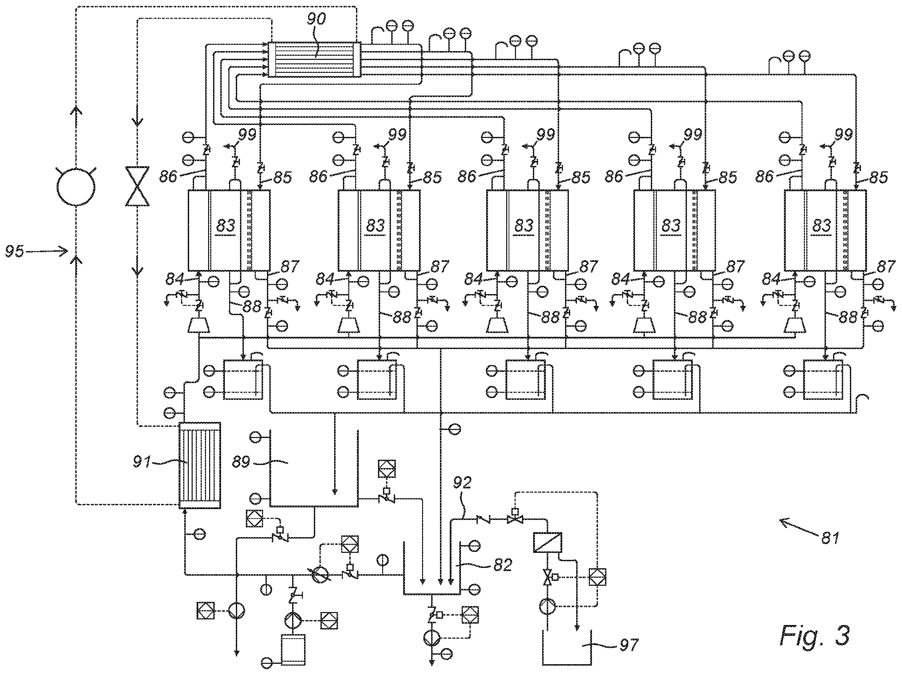

Figure 3 shows a schematic view (process scheme) of a third possible embodiment of an autonomous system (81) for purification of water taken from an external source, in particular to produce potable water, according to the present invention. The system (81) has overlap with the system (51) as shown in figure 2. However, the shown embodiment comprises a series of parallel positioned membrane distillation modules (83). Said membrane distillation modules (83) are fed by the same heat pump (95). The heat pump (95) comprises a condenser (90) for heating water to a second temperature T2 before the water is fed to each retentate channel inlet (85) of the membrane modules (83) and an evaporator (91) for cooling water to a first temperature T1 before the water is fed to the coolant channel inlet (84) of the membrane modules (83). Each membrane module (83) comprises a control valve (99) configured to obtain an equal pressure and flow per membrane module (83). Water which is discharged at each coolant channel outlet (56) of each membrane module (83) is led through the condenser (90) and subsequently into the retentate channel inlet (85) of the membrane distillation module (83) it was discharged from. In particular, each membrane module (83) comprises its own channel through the condenser (90), in order to equal flow on both the cold and hot side of the membrane module (83). A main water supply (92) for supplying non-potable water to the system (81), in the shown embodiment originating from the non-potable water buffer tank (97). Each membrane module (83) comprises at least one, and preferably multiple vapour selective membranes, a coolant channel inlet (84), for supplying water with a first temperature T1 to the membrane module (83), a retentate channel inlet (85), for supplying water with a second temperature T2 to the membrane module (83), a coolant channel outlet (86), for discharging water from the membrane module (83) which was supplied at the coolant channel inlet (84) and a retentate channel outlet (87), for discharging water from the membrane module (83) which was supplied at the retentate channel inlet (85) and a distillate outlet (88) for discharging distillate D which is distilled from water supplied at the retentate channel inlet (84) via the at least one vapour selective membrane. The system (81) furthermore comprises a distillate receiving unit (89) for receiving at least a fraction and preferably substantially all distillate D discharged from the membrane modules (83). The system (81) furthermore comprises a first buffer tank (82) for storing water. The first buffer tank (82) receives water from the retentate channel outlets (87) of the membrane modules (83) and supplies indirectly water to the coolant channel inlets (84) of the membrane modules (83).

It will be apparent that the invention is not limited to the working examples shown and described herein, but that numerous variants are possible within the scope of the attached claims that will be obvious to a person skilled in the art.

The verb "comprise" and conjugations thereof used in this patent publication are understood to mean not only "comprise", but are also understood to mean the phrases "contain", "substantially consist of", "formed by" and conjugations thereof. Where the term 'membrane module' is used, also the term 'membrane unit' can be used, or vice versa.

## Claims

1. Autonomous system (1, 51, 81) for purification of water by membrane distillation, comprising:
- at least one main water supply (2, 52, 92) for supplying water to the system (1, 51, 81),
- at least one membrane distillation module (3, 53, 83), the membrane module (3, 53, 83) comprising:
∘ at least one retentate channel for flow-through of a heated water stream, which retentate channel is at least partially defined by at least one vapour selective membrane allowing vapour of the heated water stream to flow via pores of the membrane to a distillation side of the membrane facing away from the retentate channel,
∘ at least one distillate channel at least partially defined both by said distillation side of the membrane and by a non-porous condenser wall separating said the distillate channel from a coolant channel for flow-through of a cold water stream to cool the condenser wall to condense vapour present in the distillate channel to give a distillate stream within said distillate channel,
∘ a coolant channel inlet (4, 54, 84), for supplying cold water with a first temperature to the coolant channel,
∘ a retentate channel inlet (5, 55, 85), for supplying heated water with a second temperature to the retentate channel,
wherein the second temperature is higher than the first temperature,
∘ a coolant channel outlet (6, 56, 86), for discharging water from the coolant channel,
∘ a retentate channel outlet (7, 57, 87), for discharging water from the retentate channel,
∘ at least one distillate outlet (8, 58, 88) for discharging distillate created in the distillate channel,
- at least one distillate receiving unit (9,59,89) for receiving at least a fraction and preferably substantially all distillate discharged via the distillate outlet (8, 58, 88) of the membrane distillation module (3, 53, 83),
- at least one heat pump comprising:
∘ a condenser (10, 60, 90) configured for heating water to said second temperature before feeding this heated water into the retentate channel inlet (5, 55, 85), and
∘ an evaporator (11, 61, 91) configured for cooling water to said first temperature before feeding this cooled water into the coolant channel inlet (4, 54, 84),
- preferably a renewable power supply, for powering the system (1, 51, 81), in particular said at least one heat pump,
- and at least one first buffer tank (12, 62, 82), connected to the main water supply (2, 52, 92), for storing water to be led through the evaporator (11, 61, 91) of the heat pump into the coolant channel inlet (4, 54, 84), which first buffer tank (12, 62, 82) is configured for receiving water discharged from the retentate channel outlet (7, 57, 87),
wherein the system (1, 51, 81) is configured for recirculation of at least a fraction of water from the first buffer tank (12, 62, 82) via the evaporator (11, 61, 91) of the heat pump, via the coolant channel of the membrane distillation module (3, 53, 83), directly or indirectly via the condenser (10, 60, 90) of the heat pump, via the retentate channel of the membrane distillation module (3, 53, 83), back into the first buffer tank (12, 62, 82).

2. System (1, 51, 81) according to claim 1, comprising multiple membrane distillation modules (3, 53, 83), wherein each membrane module (3, 53, 83) comprises:
∘ at least one retentate channel for flow-through of a heated water stream, which retentate channel is at least partially defined by at least one vapour selective membrane allowing vapour of the heated water stream to flow via pores of the membrane to a distillation side of the membrane facing away from the retentate channel,
∘ at least one distillate channel at least partially defined both by said distillation side of the membrane and by a non-porous condenser wall separating said the distillate channel from a coolant channel for flow-through of a cold water stream to cool the condenser wall to condense vapour present in the distillate channel to give a distillate stream within said distillate channel,
∘ a coolant channel inlet (4, 54, 84), for supplying cold water with a first temperature to the coolant channel,
∘ a retentate channel inlet (5, 55, 85), for supplying heated water with a second temperature to the retentate channel,
wherein the second temperature is higher than the first temperature,
∘ a coolant channel outlet (6, 56, 86), for discharging water from the coolant channel,
∘ a retentate channel outlet (7, 57, 87), for discharging water from the retentate channel,
∘ at least one distillate outlet (8, 58, 88) for discharging distillate created in the distillate channel,

3. System (1, 51, 81) according to claim 2, wherein said membranes modules are arranged in parallel.

4. System (1, 51, 81) according to claim 2 or 3, wherein each membrane module (3, 53, 83) comprises an individual channel through the condenser (10, 60, 90) of at least one heat pump for heating water to said second temperature before feeding this heated water into the retentate channel inlet (5, 55, 85)of the respective membrane module (3, 53, 83).

5. System (1, 51, 81) according to any of claims 2- 4, wherein each membrane module (3, 53, 83) comprises at least one control valve configured to obtain an equal pressure and flow per membrane module (3, 53, 83).

6. System (1, 51, 81) according to any of the preceding claims, comprising at least one second buffer tank (13), preferably connected to the main water supply (2, 52, 92), for storing water to be led through the condenser (10, 60, 90) of the heat pump into the retentate channel inlet (5, 55, 85), which second buffer tank (13) is configured for receiving water discharged from the coolant channel.

7. System (1, 51, 81) according to any of the preceding claims, wherein the main water supply (2, 52, 92) is provided with a main valve to selectively either (i) to allow water to flow from the main water supply (2, 52, 92) into the first buffer tank (12, 62, 82) and/or the second buffer tank (13), or (ii) to prevent water to flow from the main water supply (2, 52, 92) into the first buffer tank (12, 62, 82) and/or the second buffer tank (13).

8. System (1, 51, 81) according to any of the preceding claims, wherein at least one buffer tank (12, 13, 62, 82) is provided with at least one sensor (17, 64, 67) to measure at least one water related parameter, wherein said sensor is preferably selected from the group consisting of: a level sensor, a temperature sensor, an electrical conductivity sensor, a flow sensor and an optical sensor, and/or wherein the system (1, 51, 81) comprises at least one sensor (17, 64, 67) to measure at least one water related parameter both at the retentate channel inlet (5, 55, 85), the retentate channel out, the coolant channel inlet (4, 54, 84), and the coolant channel outlet (6, 56, 86), wherein said sensor is preferably selected from the group consisting of: a level sensor, a temperature sensor, an electrical conductivity sensor, a flow sensor and an optical sensor.

9. System (1, 51, 81) according to claim 8, wherein the system (1, 51, 81) is configured to retain the circulation until at least one sensor (17, 64, 67) measures at least one water related parameter value meeting and/or exceeding a predefined critical parameter value.

10. System (1, 51, 81) according to any of the preceding claims, wherein the system (1, 51, 81) comprises a control unit for controlling the system (1, 51, 81), in particular one or more controllable components, such as a pump, sensor (17, 64, 67), or valve, of the system (1, 51, 81).

11. System (1, 51, 81) according to any of the preceding claims, wherein at least one membrane distillation module (3, 53, 83) comprises at least one spirally wound membrane, and an adjacent spirally wound condenser wall.

12. System (1, 51, 81) according to any of the preceding claims, wherein the system (1, 51, 81) is configured to operate at a pressure below 1 bar, preferably below 0.75 bar, more preferably below 0.5 bar.

13. System (1, 51, 81) according to any of the preceding claims, wherein the condenser (10, 60, 90) is configured for heating water to a temperature of at least 40 degrees Celsius, preferably at least 50 degrees Celsius, more preferably at least 60 degrees Celsius and/or wherein the evaporator (11, 61, 91) is configured for cooling water to a temperature below 30 degrees Celsius, preferably below 20 degrees Celsius, more preferably below 15 degrees Celsius.

14. System (1, 51, 81) according to any of the preceding claims, wherein the system (1, 51, 81) comprises a plurality of membrane distillation modules (3, 53, 83), preferably arranged in parallel, wherein each membrane distillation module (3, 53, 83) is connected, either directly or indirectly, to the first buffer tank (12, 62, 82).

15. Method of operating a system (1, 51, 81) for purification of water by membrane distillation according to one of claims 1-14, comprising the steps of:
A) filling the first tank with water by using the main water supply (2, 52, 92),
B) leading water originating from the first buffer tank (12, 62, 82) through the evaporator (11, 61, 91), and subsequently through the coolant channel of at least one membrane distillation module (3, 53, 83)and directly or indirectly through the condenser (10, 60, 90), and subsequently through the retentate channel of at least one membrane distillation module (3, 53, 83)and into the first buffer tank (12, 62, 82), wherein distillate will be created within the distillate channel of the membrane distillation module (3, 53, 83), together forming a chain of components, and
C) receiving distillate created in the distillate channel in at least one distillate receiving unit (9,59,89) .

## Patentansprüche

1. Autonomes System (1, 51, 81) zur Reinigung von Wasser durch Membrandestillation, umfassend:
- mindestens eine Hauptwasserzufuhr (2, 52, 92) zum Zuführen von Wasser zu dem System (1, 51, 81),
- mindestens ein Membrandestillationsmodul (3, 53, 83), das Membranmodul (3, 53, 83) umfassend:
∘ mindestens einen Retentatkanal zum Durchströmen eines erwärmten Wasserstroms, wobei der Retentatkanal mindestens teilweise durch mindestens eine dampfselektive Membran definiert ist, die ermöglicht, dass Dampf des erwärmten Wasserstroms über Poren der Membran zu einer Destillationsseite der Membran fließt, die von dem Retentatkanal abgewandt ist,
∘ mindestens einen Destillatkanal, der mindestens teilweise definiert ist sowohl durch die Destillationsseite der Membran als auch durch eine nicht poröse Kondensatorwand die den Destillatkanal von einem Kühlmittelkanal zum Durchströmen eines Kaltwasserstroms trennt, um die Kondensatorwand zu kühlen, um Dampf, der in dem Destillatkanal vorhanden ist, zu kondensieren, um einen Destillatstrom innerhalb des Destillatkanals zu ergeben,
∘ einen Kühlmittelkanaleinlass (4, 54, 84) zum Zuführen von kaltem Wasser mit einer ersten Temperatur zu dem Kühlmittelkanal,\
∘ einen Retentatkanaleinlass (5, 55, 85) zum Zuführen von erwärmtem Wasser mit einer zweiten Temperatur zu dem Retentatkanal,
wobei die zweite Temperatur höher ist als die erste Temperatur,
∘ einen Kühlmittelkanalauslass (6, 56, 86) zum Ablassen von Wasser aus dem Kühlmittelkanal,
∘ einen Retentatkanalauslass (7, 57, 87) zum Ablassen von Wasser aus dem Retentatkanal,
∘ mindestens einen Destillatauslass (8, 58, 88) zum Ablassen von Destillat, das in dem Destillatkanal erzeugt wird,
- mindestens eine Destillataufnahmeeinheit (9,59,89) zum Aufnehmen mindestens einer Fraktion und vorzugsweise im Wesentlichen des gesamten Destillats, das über den Destillatauslass (8, 58, 88) des Membrandestillationsmoduls (3, 53, 83) abgelassen wird,
- mindestens eine Wärmepumpe, umfassend:
∘ einen Kondensator (10, 60, 90), der konfiguriert ist, um Wasser auf die zweite Temperatur zu erwärmen, bevor dieses erwärmte Wasser in den Retentatkanaleinlass (5, 55, 85) gespeist wird, und
∘ einen Verdampfer (11, 61, 91), der konfiguriert ist, um Wasser auf die erste Temperatur zu kühlen, bevor dieses gekühlte Wasser in den Kühlkanaleinlass (4, 54, 84) gespeist wird,
- vorzugsweise eine Zufuhr erneuerbarer Energie, um das System (1, 51, 81), insbesondere die mindestens eine Wärmepumpe, mit Energie zu versorgen,
- und mindestens einen ersten Zwischenspeichertank (12, 62, 82), der mit der Hauptwasserzufuhr (2, 52, 92) verbunden ist, zum Speichern von Wasser, das durch den Verdampfer (11, 61, 91) der Wärmepumpe in den Kühlmitteleinlass (4, 54, 84) geleitet werden soll, wobei der erste Zwischenspeichertank (12, 62, 82) zum Aufnehmen von Wasser konfiguriert ist, das aus dem Retentatkanalauslass (7, 57, 87) abgelassen wird,
wobei das System (1, 51, 81) zur Rückführung zumindest eines Teils von Wasser aus dem ersten Zwischenspeichertank (12, 62, 82) über den Verdampfer (11, 61, 91) der Wärmepumpe, über den Kühlmittelkanal des Membrandestillationsmoduls (3, 53, 83), direkt oder indirekt über den Kondensator (10, 60, 90) der Wärmepumpe, über den Retentatkanal des Membrandestillationsmoduls (3, 53, 83) zurück in den ersten Zwischenspeichertank (12, 62, 82) konfiguriert ist.

2. System (1, 51, 81) nach Anspruch 1, umfassend mehrere Membrandestillationsmodule (3, 53, 83), wobei jedes Membranmodul (3, 53, 83) umfasst:
∘ mindestens einen Retentatkanal zum Durchströmen eines erwärmten Wasserstroms, wobei der Retentatkanal mindestens teilweise durch mindestens eine dampfselektive Membran definiert ist, die ermöglicht, dass Dampf des erwärmten Wasserstroms über Poren der Membran zu einer Destillationsseite der Membran fließt, die von dem Retentatkanal abgewandt ist,
∘ mindestens einen Destillatkanal, der mindestens teilweise sowohl durch die Destillationsseite der Membran als auch durch eine nicht poröse Kondensatorwand definiert ist, die den Destillatkanal von einem Kühlmittelkanal zum Durchströmen eines Kaltwasserstroms trennt, um die Kondensatorwand zu kühlen, um Dampf, der in dem Destillatkanal vorhanden ist, zu kondensieren, um einen Destillatstrom innerhalb des Destillatkanals zu ergeben,
∘ einen Kühlmittelkanaleinlass (4, 54, 84) zum Zuführen von kaltem Wasser mit einer ersten Temperatur zu dem Kühlmittelkanal,
∘ einen Retentatkanaleinlass (5, 55, 85) zum Zuführen von erwärmtem Wasser mit einer zweiten Temperatur zu dem Retentatkanal,
wobei die zweite Temperatur höher ist als die erste Temperatur,
∘ einen Kühlmittelkanalauslass (6, 56, 86) zum Ablassen von Wasser aus dem Kühlmittelkanal,
∘ einen Retentatkanalauslass (7, 57, 87) zum Ablassen von Wasser aus dem Retentatkanal,
∘ mindestens einen Destillatauslass (8, 58, 88) zum Ablassen von Destillat, das in dem Destillatkanal erzeugt wird,

3. System (1, 51, 81) nach Anspruch 2, wobei die Membranmodule parallel angeordnet sind.

4. System (1, 51, 81) nach Anspruch 2 oder 3, wobei jedes Membranmodul (3, 53, 83) einen individuellen Kanal durch den Kondensator (10, 60, 90) mindestens einer Wärmepumpe zum Erwärmen von Wasser auf die zweite Temperatur umfasst, bevor dieses erwärmte Wasser in den Retentatkanaleinlass (5, 55, 85) des jeweiligen Membranmoduls (3, 53, 83) gespeist wird.

5. System (1, 51, 81) nach einem der Ansprüche 2-4, wobei jedes Membranmodul (3, 53, 83) mindestens ein Steuerventil umfasst, das konfiguriert ist, um einen gleichen Druck und Durchfluss pro Membranmodul (3, 53, 83) zu erlangen.

6. System (1, 51, 81) nach einem der vorherigen Ansprüche, umfassend mindestens einen zweiten Zwischenspeichertank (13), der vorzugsweise mit der Hauptwasserzufuhr (2, 52, 92) verbunden ist, zum Speichern von Wasser, das durch den Kondensator (10, 60, 90) der Wärmepumpe in den Retentatkanaleinlass (5, 55, 85) geleitet werden soll, wobei der zweite Zwischenspeichertank (13) zum Aufnehmen von Wasser konfiguriert ist, das aus dem Kühlmittelkanal abgelassen wird.

7. System (1, 51, 81) nach einem der vorherigen Ansprüche, wobei die Hauptwasserzufuhr (2, 52, 92) mit einem Hauptventil versehen ist, um selektiv entweder (i) zu ermöglichen, dass Wasser von der Hauptwasserzufuhr (2, 52, 92) in den ersten Zwischenspeichertank (12, 62, 82) und/oder den zweiten Zwischenspeichertank (13) fließt, oder (ii) zu verhindern, dass Wasser von der Hauptwasserzufuhr (2, 52, 92) in den ersten Zwischenspeichertank (12, 62, 82) und/oder den zweiten Zwischenspeichertank (13) fließt.

8. System (1, 51, 81) nach einem der vorherigen Ansprüche, wobei mindestens ein Zwischenspeichertank (12, 13, 62, 82) mit mindestens einem Sensor (17, 64, 67) versehen ist, um mindestens einen wasserbezogenen Parameter zu messen, wobei der Sensor vorzugsweise ausgewählt ist aus der Gruppe, bestehend aus: einem Füllstandssensor, einem Temperatursensor, einem elektrischen Leitfähigkeitssensor, einem Durchflusssensor und einem optischen Sensor, und/oder wobei das System (1, 51, 81) mindestens einen Sensor (17, 64, 67) umfasst, um mindestens einen wasserbezogenen Parameter sowohl an dem Retentatkanaleinlass (5, 55, 85), dem Retentatkanalauslass, dem Kühlmitteleinlass (4, 54, 84) als auch dem Kühlmittelauslass (6, 56, 86) zu messen, wobei der Sensor vorzugsweise ausgewählt ist aus der Gruppe, bestehend aus: einem Füllstandssensor, einem Temperatursensor, einem elektrischen Leitfähigkeitssensor, einem Durchflusssensor und einem optischen Sensor.

9. System (1, 51, 81) nach Anspruch 8, wobei das System (1, 51, 81) konfiguriert ist, um die Zirkulation aufrechtzuerhalten, bis mindestens ein Sensor (17, 64, 67) mindestens einen wasserbezogenen Parameterwert misst, der einen vordefinierten kritischen Parameterwert erfüllt und/oder überschreitet.

10. System (1, 51, 81) nach einem der vorherigen Ansprüche, wobei das System (1, 51, 81) eine Steuereinheit zum Steuern des Systems (1, 51, 81), insbesondere einer oder mehrerer steuerbarer Komponenten, wie beispielsweise einer Pumpe, eines Sensors (17, 64, 67) oder eines Ventils, des Systems (1, 51, 81) umfasst.

11. System (1, 51, 81) nach einem der vorherigen Ansprüche, wobei mindestens ein Membrandestillationsmodul (3, 53, 83) mindestens eine spiralförmig gewickelte Membran und eine angrenzende spiralförmig gewickelte Kondensatorwand umfasst.

12. System (1, 51, 81) nach einem der vorherigen Ansprüche, wobei das System (1, 51, 81) konfiguriert ist, um bei einem Druck unter 1 bar, vorzugsweise unter 0,75 bar, bevorzugter unter 0,5 bar betrieben zu werden.

13. System (1, 51, 81) nach einem der vorherigen Ansprüche, wobei der Kondensator (10, 60, 90) konfiguriert ist, um Wasser auf eine Temperatur von mindestens 40 Grad Celsius, vorzugsweise mindestens 50 Grad Celsius, bevorzugter mindestens 60 Grad Celsius zu erwärmen, und/oder wobei der Verdampfer (11, 61, 91) konfiguriert ist, um Wasser auf eine Temperatur unter 30 Grad Celsius, vorzugsweise unter 20 Grad Celsius, bevorzugter unter 15 Grad Celsius zu kühlen.

14. System (1, 51, 81) nach einem der vorherigen Ansprüche, wobei das System (1, 51, 81) eine Vielzahl von Membrandestillationsmodulen (3, 53, 83) umfasst, die vorzugsweise parallel angeordnet sind, wobei jedes Membrandestillationsmodul (3, 53, 83) entweder direkt oder indirekt mit dem ersten Zwischenspeichertank (12, 62, 82) verbunden ist.

15. Verfahren zum Betreiben eines Systems (1, 51, 81) zur Reinigung von Wasser durch Membrandestillation nach einem der Ansprüche 1-14, umfassend die folgenden Schritte:
A) Füllen des ersten Tanks mit Wasser unter Verwendung der Hauptwasserzufuhr (2, 52, 92),
B) Leiten von Wasser, das aus dem ersten Zwischenspeichertank (12, 62, 82) stammt, durch den Verdampfer (11, 61, 91) und anschließend durch den Kühlmittelkanal mindestens eines Membrandestillationsmoduls (3, 53, 83) und direkt oder indirekt durch den Kondensator (10, 60, 90), und anschließend durch den Retentatkanal mindestens eines Membrandestillationsmoduls (3, 53, 83) und in den ersten Zwischenspeichertank (12, 62, 82), wobei innerhalb des Destillatkanals des Membrandestillationsmoduls (3, 53, 83) Destillat erzeugt wird, das zusammen eine Kette von Komponenten bildet, und
C) Aufnehmen von Destillat, das in dem Destillatkanal erzeugt wird, in mindestens einer Destillataufnahmeeinheit (9,59,89).

## Revendications

1. Système autonome (1, 51, 81) de purification d'eau par distillation membranaire, comprenant :
- au moins une alimentation en eau principale (2, 52, 92) pour alimenter en eau le système (1, 51, 81),
- au moins un module de distillation membranaire (3, 53, 83), le module de membrane (3, 53, 83) comprenant :
∘ au moins un canal de rétentat pour le passage d'un flux d'eau chauffée, canal de rétentat qui est au moins partiellement défini par au moins une membrane sélective de vapeur permettant à la vapeur du flux d'eau chauffée de s'écouler via les pores de la membrane vers un côté de distillation de la membrane opposé au canal de rétentat,
∘ au moins un canal de distillat au moins partiellement défini à la fois par ledit côté de distillation de la membrane et par une paroi de condenseur non poreuse séparant ledit canal de distillat d'un canal de réfrigérant pour le passage d'un flux d'eau froide pour refroidir la paroi de condenseur afin de condenser la vapeur présente dans le canal de distillat pour donner un flux de distillat à l'intérieur dudit canal de distillat,
∘ une entrée de canal de réfrigérant (4, 54, 84), pour alimenter en eau froide ayant une première température le canal de réfrigérant,
∘ une entrée de canal de rétentat (5, 55, 85), pour alimenter en eau chauffée ayant une deuxième température le canal de rétentat, dans lequel la deuxième température est supérieure à la première température.
∘ une sortie de canal de réfrigérant (6, 56, 86), pour évacuer l'eau du canal de réfrigérant,
∘ une sortie de canal de rétentat (7, 57, 87), pour évacuer l'eau du canal de rétentat,
∘ au moins une sortie de distillat (8, 58, 88) pour évacuer le distillat créé dans le canal de distillat,
- au moins une unité de réception de distillat (9,59,89) pour recevoir au moins une fraction et de préférence sensiblement tout le distillat évacué via la sortie de distillat (8, 58, 88) du module de distillation membranaire (3, 53, 83),
- au moins une pompe à chaleur comprenant :
∘ un condenseur (10, 60, 90) configuré pour chauffer l'eau à ladite deuxième température avant d'introduire cette eau chauffée dans l'entrée de canal de rétentat (5, 55, 85), et
∘ un évaporateur (11, 61, 91) configuré pour refroidir l'eau à ladite première température avant d'introduire cette eau refroidie dans l'entrée de canal de réfrigérant (4, 54, 84),
- de préférence une alimentation en énergie renouvelable, pour alimenter le système (1, 51, 81), en particulier ladite au moins une pompe à chaleur,
- et au moins un premier réservoir tampon (12, 62, 82), relié à l'alimentation en eau principale (2, 52, 92), pour stocker l'eau devant être conduite à travers l'évaporateur (11, 61, 91) de la pompe à chaleur dans l'entrée de canal de réfrigérant (4, 54, 84), premier réservoir tampon (12, 62, 82) qui est configuré pour recevoir l'eau évacuée de la sortie de canal de rétentat (7, 57, 87),
dans lequel le système (1, 51, 81) est configuré pour la recirculation d'au moins une fraction d'eau provenant du premier réservoir tampon (12, 62, 82) via l'évaporateur (11, 61, 91) de la pompe à chaleur, via le canal de réfrigérant du module de distillation membranaire (3, 53, 83), directement ou indirectement via le condenseur (10, 60, 90) de la pompe à chaleur, via le canal de rétentat du module de distillation membranaire (3, 53, 83), de retour dans le premier réservoir tampon (12, 62, 82).

2. Système (1, 51, 81) selon la revendication 1, comprenant de multiples modules de distillation membranaire (3, 53, 83), dans lequel chaque module de membrane (3, 53, 83) comprend :
∘ au moins un canal de rétentat pour le passage d'un flux d'eau chauffée, canal de rétentat qui est au moins partiellement défini par au moins une membrane sélective de vapeur permettant à la vapeur du flux d'eau chauffée de s'écouler via les pores de la membrane vers un côté de distillation de la membrane opposé au canal de rétentat,
∘ au moins un canal de distillat au moins partiellement défini à la fois par ledit côté de distillation de la membrane et par une paroi de condenseur non poreuse séparant ledit canal de distillat d'un canal de réfrigérant pour le passage d'un flux d'eau froide pour refroidir la paroi de condenseur afin de condenser la vapeur présente dans le canal de distillat pour donner un flux de distillat à l'intérieur dudit canal de distillat,
∘ une entrée de canal de réfrigérant (4, 54, 84), pour alimenter en eau froide ayant une première température le canal de réfrigérant,
∘ une entrée de canal de rétentat (5, 55, 85), pour alimenter en eau chauffée ayant une deuxième température le canal de rétentat,
dans lequel la deuxième température est supérieure à la première température.
∘ une sortie de canal de réfrigérant (6, 56, 86), pour évacuer l'eau du canal de réfrigérant,
∘ une sortie de canal de rétentat (7, 57, 87), pour évacuer l'eau du canal de rétentat,
∘ au moins une sortie de distillat (8, 58, 88) pour évacuer le distillat créé dans le canal de distillat,

3. Système (1, 51, 81) selon la revendication 2, dans lequel lesdits modules de membranes sont agencés en parallèle.

4. Système (1, 51, 81) selon la revendication 2 ou 3, dans lequel chaque module de membrane (3, 53, 83) comprend un canal individuel à travers le condenseur (10, 60, 90) d'au moins une pompe à chaleur pour chauffer l'eau à ladite deuxième température avant d'introduire cette eau chauffée dans l'entrée de canal de rétentat (5, 55, 85) du module de membrane respectif (3, 53, 83).

5. Système (1, 51, 81) selon l'une quelconque des revendications 2 à 4, dans lequel chaque module de membrane (3, 53, 83) comprend au moins une vanne de commande configurée pour obtenir une pression et un débit égaux par module de membrane (3, 53, 83).

6. Système (1, 51, 81) selon l'une quelconque des revendications précédentes, comprenant au moins un deuxième réservoir tampon (13), de préférence relié à l'alimentation en eau principale (2, 52, 92), pour stocker l'eau devant être conduite à travers le condenseur (10, 60, 90) de la pompe à chaleur dans l'entrée de canal de rétentat (5, 55, 85), deuxième réservoir tampon (13) qui est configuré pour recevoir l'eau évacuée du canal de réfrigérant.

7. Système (1, 51, 81) selon l'une quelconque des revendications précédentes, dans lequel l'alimentation en eau principale (2, 52, 92) est pourvue d'une vanne principale pour sélectivement (i) permettre à l'eau de s'écouler de l'alimentation en eau principale (2, 52, 92) dans le premier réservoir tampon (12, 62, 82) et/ou le deuxième réservoir tampon (13), ou (ii) empêcher l'eau de s'écouler de l'alimentation en eau principale (2, 52, 92) dans le premier réservoir tampon (12, 62, 82) et/ou le deuxième réservoir tampon (13).

8. Système (1, 51, 81) selon l'une quelconque des revendications précédentes, dans lequel au moins un réservoir tampon (12, 13, 62, 82) est pourvu d'au moins un capteur (17, 64, 67) pour mesurer au moins un paramètre lié à l'eau, dans lequel ledit capteur est de préférence choisi dans le groupe constitué par : un capteur de niveau, un capteur de température, un capteur de conductivité électrique, un capteur de débit et un capteur optique, et/ou dans lequel le système (1, 51, 81) comprend au moins un capteur (17, 64, 67) pour mesurer au moins un paramètre lié à l'eau à la fois au niveau de l'entrée de canal de rétentat (5, 55, 85), de la sortie de canal de rétentat, au niveau de l'entrée de canal de réfrigérant (4, 54, 84) et de la sortie de canal de réfrigérant (6, 56, 86), dans lequel ledit capteur est de préférence choisi dans le groupe constitué par : un capteur de niveau, un capteur de température, un capteur de conductivité électrique, un capteur de débit et un capteur optique.

9. Système (1, 51, 81) selon la revendication 8, dans lequel le système (1, 51, 81) est configuré pour retenir la circulation jusqu'à ce qu'au moins un capteur (17, 64, 67) mesure au moins une valeur de paramètre lié à l'eau atteignant et/ou dépassant une valeur de paramètre critique prédéfinie.

10. Système (1, 51, 81) selon l'une quelconque des revendications précédentes, dans lequel le système (1, 51, 81) comprend une unité de commande pour commander le système (1, 51, 81), en particulier un ou plusieurs composants pouvant être commandés, tels qu'une pompe, un capteur (17, 64, 67), ou une vanne, du système (1, 51, 81).

11. Système (1, 51, 81) selon l'une quelconque des revendications précédentes, dans lequel au moins un module de distillation membranaire (3, 53, 83) comprend au moins une membrane enroulée en spirale et une paroi de condenseur enroulée en spirale adjacente.

12. Système (1, 51, 81) selon l'une quelconque des revendications précédentes, dans lequel le système (1, 51, 81) est configuré pour fonctionner à une pression inférieure à 1 bar, de préférence inférieure à 0,75 bar, plus préférablement inférieure à 0,5 bar.

13. Système (1, 51, 81) selon l'une quelconque des revendications précédentes, dans lequel le condenseur (10, 60, 90) est configuré pour chauffer l'eau à une température d'au moins 40 degrés Celsius, de préférence d'au moins 50 degrés Celsius, plus préférablement d'au moins 60 degrés Celsius et/ou dans lequel l'évaporateur (11, 61, 91) est configuré pour refroidir l'eau à une température inférieure à 30 degrés Celsius, de préférence inférieure à 20 degrés Celsius, plus préférablement inférieure à 15 degrés Celsius.

14. Système (1, 51, 81) selon l'une quelconque des revendications précédentes, dans lequel le système (1, 51, 81) comprend une pluralité de modules de distillation membranaire (3, 53, 83), de préférence agencés en parallèle, dans lequel chaque module de distillation membranaire (3, 53, 83) est relié, directement ou indirectement, au premier réservoir tampon (12, 62, 82).

15. Procédé de fonctionnement d'un système (1, 51, 81) de purification d'eau par distillation membranaire selon l'une des revendications 1 à 14, comprenant les étapes consistant à :
A) remplir le premier réservoir avec de l'eau en utilisant l'alimentation en eau principale (2, 52, 92),
B) amener l'eau provenant du premier réservoir tampon (12, 62, 82) à travers l'évaporateur (11, 61, 91), puis à travers le canal de réfrigérant d'au moins un module de distillation membranaire (3, 53, 83) et directement ou indirectement à travers le condenseur (10, 60, 90), puis à travers le canal de rétentat d'au moins un module de distillation membranaire (3, 53, 83) et dans le premier réservoir tampon (12, 62, 82), dans lequel le distillat sera créé à l'intérieur du canal de distillat du module de distillation membranaire (3, 53, 83), formant ensemble une chaîne de composants, et
C) recevoir le distillat créé dans le canal de distillat dans au moins une unité de réception de distillat (9,59,89).
